# FASCICULE DE BREVET EUROPEEN

(11) **EP 1 360 151 B1**
(45) Date de publication et mention de la délivrance du brevet: **04.07.2018**
(21) Numéro de dépôt: 02704837.0
(22) Date de dépôt: 14.02.2002
(51) Int. Cl.: C02F 11/18

(54) **PROCEDE POUR L'HYDROLYSE THERMIQUE DES BOUES**
VERFHAREN ZUR THERMISCHEN HYDROLYSE VON SCHLÄMMEN
METHOD FOR THE THERMAL HYDROLYSIS OF SLUDGE

(30) Priorité: 14.02.2001 FR 0102038
(43) Date de publication de la demande: 12.11.2003
(73) Titulaire: Veolia Water Solutions & Technologies Support, 94410 Saint-Maurice (FR)
(72) Inventeur: HOJSGAARD, Soren, J., 3400 Hillerod (DK); BISGAARD, Jens Christian, 2100 KBH.O (DK); BOISSONNADE, Geneviène, 75012 Paris (FR)
(74) Mandataire: Vidon Brevets & Stratégie
(86) Numéro de dépôt international: PCT/FR2002/000577
(87) Numéro de publication internationale: WO 2002/064516

(56) Documents cités:
- US-A- 4 017 421
- US-A- 5 188 740
- US-A- 5 785 852

## Description

L'invention concerne le domaine du traitement des boues fortement chargées en matières organiques fermentescibles et notamment des boues issues des processus de dépollution des eaux usées urbaines ou industrielles, des processus de production d'eau potable à partir d'eau de surface ou souterraine, ou bien encore des boues issues des opérations de curage des réseaux.

Actuellement, une partie des boues produites par les stations d'épuration est valorisée dans le domaine agricole tandis qu'une autre partie est stockée en décharge. La production de ces boues étant de plus en plus importante, il est nécessaire que celles-ci ne présentent pas de danger pour l'environnement et la santé humaine. En effet, ces boues contiennent des germes dont certains sont pathogènes (bactéries coliformes, salmonelles, oeufs d'helminthes, ...). De plus, elles sont très fermentescibles et sont à l'origine de la production de gaz (aminés, sulfure d'hydrogène, mercaptans) qui engendrent des nuisances olfactives.

Ces considérations expliquent la nécessité de mettre en oeuvre, sur les filières de traitement indiquées ci-dessus, au moins une étape de stabilisation de ces boues visant à obtenir des boues n'évoluant plus, ou à tout le moins, évoluant peu rapidement, tant sur le plan biologique que sur le plan physico-chimique. Une autre préoccupation réside dans la volonté de réduire le volume de ces boues.

Différents procédés ont été proposés dans l'état de la technique pour traiter ces boues. Ces procédés peuvent être classés essentiellement comme suit :
- la digestion aérobie,
- la digestion anaérobie ,
- le conditionnement chimique,
- le conditionnement thermique.

C'est à ce dernier type de traitement que se rapporte l'invention.

L'hydrolyse thermique des boues consiste à traiter celles-ci à haute température sous pression de façon à les hygiéniser (c'est-à-dire à abattre très fortement leur teneur en micro-organismes) et à transformer la matière organique qu'elles contiennent en DCO soluble biodégradable (alcools, aldéhydes, acides gras volatils).

La technique d'hydrolyse thermique des boues la plus ancienne a été mise au point par Portheous au début du siècle. Selon cette technique, qui met en oeuvre un certain nombre de réacteurs sous pression, fonctionnant par séquence, la boue est pompée dans un premier réacteur dans laquelle de la vapeur produite par une chaudière est injectée jusqu'à l'obtention d'une température d'environ 180 °C pour une pression de 15 bar, la température est ensuite maintenue pendant 30 minutes puis la boue est évacuée sous sa propre pression à travers un échangeur thermique. Cet échangeur thermique est utilisé pour récupérer la chaleur de la boue sortant du réacteur et réchauffer la boue à traiter entrant dans un deuxième réacteur.

Ce procédé présente toutefois l'inconvénient d'être discontinu et de montrer une faible productivité.

Dans les années cinquante, FARRER a proposé un procédé continu et automatique d'hydrolyse thermique des boues. Selon ce procédé, les boues épaissies subissent une dilacération, avant d'être pompées sous pression (20 à 35 bar) pour être introduites dans un échangeur dit primaire qui a un double but : préchauffer les boues entrantes jusqu'à 180°C environ, et refroidir les boues issues du traitement thermique. Les boues préchauffées passent ensuite dans un deuxième échangeur de chaleur où elles sont amenées à une température supérieure à 200°C. L'apport calorifique est réalisé par de l'eau chaude produite par une chaudière. Les boues sont ensuite acheminées dans le réacteur proprement dit où le traitement se produit pendant un temps et une température données. Les boues sont ensuite retournées à l'échangeur primaire. En fin de circuit, les boues sont ramenées à la pression atmosphérique par un système de décharge.

Ce type de procédé présente les inconvénients d'engendrer des odeurs nauséabondes, de nécessiter l'utilisation de matériels s'encrassant rapidement et impliquant donc une maintenance importante. De plus, il requiert des investissements coûteux et en pratique a été réservé à des installations de taille importante permettant de disposer de chaînes de débit comprise entre 20 et 50 m³/h afin d'assurer une décharge continue des boues et, ainsi, d'éviter les phénomènes destructeurs de cavitation et de construire des échanges à grande section de passage spécialement profilés.

WO96/09882 décrit quant à lui un procédé fonctionnant en "batch" et mettant en oeuvre quatre réacteurs installés en série. Selon ce procédé discontinu, la boue passe par pompage dans les différents réacteurs, dont les trois premiers sont chauffés, pour y être traitée. La boue du troisième réacteur, chauffée par injection de vapeur vive, et éventuellement du quatrième réacteur, est détendue d'une manière brutale ("flash") pour produire de la vapeur de flash. La vapeur de flash provenant du troisième réacteur est renvoyée au deuxième réacteur. La vapeur de flash provenant du quatrième réacteur est renvoyée au premier réacteur.

Cette technique présente l'inconvénient de ne pouvoir fonctionner qu'en discontinu, c'est-à-dire de ne pouvoir traiter que des lots successifs de boues. La production de vapeur vive nécessaire à la mise en oeuvre de cette technique ne peut donc également être continue. Les boues passent par ailleurs par l'ensemble des réacteurs au cours de son traitement. Ceci implique l'utilisation de matériels, tels que des vannes, soumis à des conditions difficiles de fonctionnement. US4017421 décrit un procédé pour l'hydrolyse thermique des boues caractérisé en ce qu'il est mené dans au moins deux réacteurs fonctionnant en parallèle dans chacun desquels les boues subissent un cycle complet d'hydrolyse thermique, ledit cycle comprenant les étapes consistant à alimenter lesdites boues dans ledit réacteur, à y injecter de la vapeur vive permettant l'hydrolyse, à ramener subitement lesdites boues à la pression atmosphérique en libérant de la vapeur de flash, et à vidanger ledit réacteur desdites boues ainsi hydrolysées, et en ce qu'il consiste à décaler dans le temps ledit cycle d'un réacteur à l'autre pour utiliser la vapeur de flash produite à partir d'un réacteur pour l'injecter dans l'autre réacteur. L'objectif de la présente invention est de proposer un nouveau procédé de traitements par hydrolyse thermique des boues ne présentant pas les inconvénients de l'état de la technique.

Notamment un objectif de la présente invention est de décrire un tel procédé pouvant mettre en oeuvre une production et une utilisation continue de vapeur vive.

Encore un objectif de la présente invention est de divulguer un tel procédé qui permet également un traitement en continu des boues.

Un autre objectif de la présente invention est de réaliser l'essentiel des réactions concernant un lot de boues dans un seul réacteur afin de minimiser les tranferts de boues.

Un objectif de la présente invention est aussi de permettre le traitement thermique de boues préalablement déshydratées.

Ces différents objectifs, ainsi que d'autres qui apparaîtront par la suite sont atteints grâce à l'invention qui concerne un procédé pour l'hydrolyse thermique des boues caractérisé en ce qu'il est mené dans au moins trois réacteurs fonctionnant en parallèle dans chacun desquels les boues subissent un cycle complet d'hydrolyse thermique, ledit cycle comprenant les étapes consistant à alimenter lesdites boues dans ledit réacteur, à y injecter de la vapeur vive pour les amener à une pression P et à une température T permettant l'hydrolyse, à les maintenir à ladite pression P et à ladite température T pendant un certain temps, à ramener subitement lesdites boues à la pression atmosphérique en libérant de la vapeur de flash, et à vidanger ledit réacteur desdites boues ainsi hydrolysées,
et en ce qu'il consiste à décaler dans le temps ledit cycle d'un réacteur à l'autre pour utiliser la vapeur de flash produite à partir d'un réacteur pour l'injecter dans l'autre réacteur.

Un tel procédé présente l'avantage de mettre en oeuvre un cycle complet d'hydrolyse des boues dans chaque réacteur et, en utilisant au moins trois réacteurs dont le cycle de fonctionnement est décalé, de profiter de la vapeur de flash produite dans un des réacteurs pour alimenter en vapeur l'autre réacteur.

En s'affranchissant de la nécessité de faire transiter les boues d'un réacteur à l'autre pour effectuer les différentes étapes de l'hydrolyse thermique, le procédé permet de simplifier les installations nécessaires à la mise en oeuvre du procédé, de diminuer la vitesse d'encrassage de ces installations, et de minimiser les odeurs pouvant se produire lors du passage des boues d'un réacteur à l'autre.

Selon l'invention, le procédé proposé est mené dans au moins trois réacteurs fonctionnant en parallèle.

Ainsi, la vapeur vive est injectée continûment alternativement dans lesdits trois réacteurs.

Un tel aspect du procédé permet de produire de la vapeur vive à partir d'une chaudière en continu, sans avoir à se soucier de distribuer la vapeur de façon discontinue.

Le décalage des débuts de cycles d'hydrolyse thermique d'un réacteur à l'autre est calculé de façon telle que le procédé comprend trois phases :
- une première phase durant laquelle :
   - des boues sont alimentées dans un premier réacteur et de la vapeur de flash provenant d'un troisième réacteur est injectée dans ledit premier réacteur,
   - de la vapeur vive est injectée dans un deuxième réacteur contenant des boues,
   - un troisième réacteur contenant des boues est maintenu à la température et à la pression d'hydrolyse puis ramené à la pression détendue, la vapeur de flash émise étant acheminé dans ledit premier réacteur, juste avant d'être vidangé ;
- une deuxième phase durant laquelle :
   - de la vapeur vive est injectée dans ledit premier réacteur,
   - le deuxième réacteur est maintenu à la température et à la pression d'hydrolyse puis ramené à la pression détendue, la vapeur de flash émise étant acheminé à l'intérieur dudit troisième réacteur, juste avant d'être vidangé,
   - des boues sont alimentées dans ledit troisième réacteur et de la vapeur de flash provenant du deuxième réacteur est injectée dans ledit troisième réacteur ;
- une troisième phase durant laquelle :
   - le premier réacteur est maintenu à la température et à la pression d'hydrolyse puis ramené à la pression détendue, la vapeur de flash émise étant acheminé à l'intérieur dudit deuxième réacteur, juste avant d'être vidangé,
   - des boues sont alimentées dans ledit deuxième réacteur et de la vapeur de flash provenant du premier réacteur est injectée dans ledit deuxième réacteur,
   - de la vapeur vive est injectée dans ledit troisième réacteur.

Selon ce procédé, la vapeur vive peut-être produite en continu et distribuée alternativement dans les premier, deuxième et troisième réacteurs. L'utilisation de la vapeur de flash produit par détente brutale du contenu des réacteurs est quant à elle optimisée. Une telle alimentation continue permet d'utiliser une chaudière de facture simple et un jeu de vannes temporisées pour distribuer tour à tour la vapeur produite dans la chaudière pour alimenter.

Selon une autre variante intéressante de l'invention, le procédé est mis en oeuvre dans plus de trois réacteurs fonctionnant en parallèle avec des temps de cycle adaptés pour que la vapeur vive puisse être injectée continûment alternativement dans lesdits réacteurs, les boues étant injectées continûment alternativement dans les réacteurs et extraites continûment alternativement des réacteurs.

Une telle variante permet d'allier les avantages résultant de l'alimentation continue en vapeur vive et de l'alimentation en continu des boues à traiter.

La température et la pression mises en oeuvre au sein des réacteurs pour mener à bien l'hydrolyse thermique des boues pourront varier. Préférentiellement, cette pression est comprise entre 10 bar 20 bar et cette température est comprise entre 130°C et 200 °C.

La durée des cycles complets d'hydrolyse thermique effectués dans chaque réacteur pourra varier notamment selon la nature des boues et l'intensité du traitement qu'on souhaitera leur faire subir. Chaque cycle regroupe les étapes :
- d'alimentation du réacteur en boues ;
- d'injection de vapeur de flash ;
- d'injection de vapeur vive ;
- de rétention ;
- de détente ; et,
- d'évacuation des boues du réacteur.

Selon une variante préférentielle, la durée de chaque cycle est comprise entre 100 mn et 360 mn. D'une façon préférée entre toutes, la durée de ce cycle sera comprise entre environ 150 mn et environ 160 mn lorsque l'on utilisera trois réacteurs.

Le décalage dans le temps du cycle d'hydrolyse d'un réacteur à l'autre pourra également varier. Il sera préférentiellement choisi pour permettre une alimentation continue de la vapeur successivement dans les réacteurs.

Selon un autre aspect particulièrement intéressant de l'invention, le procédé proposé comprend préférentiellement une étape de digestion mésophile ou thermophile des boues hydrolysées conduisant à la production d'un biogaz, ledit biogaz étant utilisé pour générer au moins une partie de la vapeur vive nécessaire à l'hydrolyse thermique effectuée dans lesdits au moins deux réacteurs fonctionnant en parallèle. L'étape de digestion pourra également être aérobie thermophile.

Une telle combinaison du procédé à une digestion mésophile ou thermophile permet d'augmenter les rendements de l'étape de digestion, de diminuer les émissions d'odeurs nauséabondes, et d'optimiser la production de biogaz. Cette combinaison permet également de réduire la quantité de boues résiduelles et d'obtenir des boues parfaitement stabilisées et hygiénisées.

Selon une variante du procédé, ladite étape de digestion est couplée à l'hydrolyse thermique, les boues générées par ladite digestion étant mélangées, en tout ou partie, avec les boues en excès et à nouveau hydrolysées. Un tel couplage permet d'atteindre une grande minéralisation des boues et donc de réduire très fortement leur volume.

Egalement selon une variante préférentielle de l'invention, le procédé comprend une étape consistant à thermocompresser ladite vapeur de flash par ladite vapeur vive et ainsi optimiser le temps de cycle de l'hydrolyse en réalisant la phase de chauffage en une étape au lieu de deux.

Les boues digérées pourront aussi, au moins en partie, être incinérées ou oxydées par voie humide.

Préférentiellement, ladite installation inclut également au moins un digesteur.

Selon une variante l'installation comprend aussi des moyens d'incinération ou des moyens d'oxydation par voie humide de tout ou partie des boues digérées

L'invention, ainsi que les différents avantages qu'elle présente seront mieux compris grâce à la description qui va suivre d'un mode de réalisation de l'invention donnée en référence aux dessins dans lesquels :
- la figure 1 représente un premier mode de réalisation d'une installation pour la mise en oeuvre du procédé selon l'invention;
- la figure 2 représente un synoptique de fonctionnement de l'installation représentée à la figure 1 ;
- la figure 3 représente un second mode de réalisation d'une installation pour la mise en oeuvre du procédé selon l'invention.

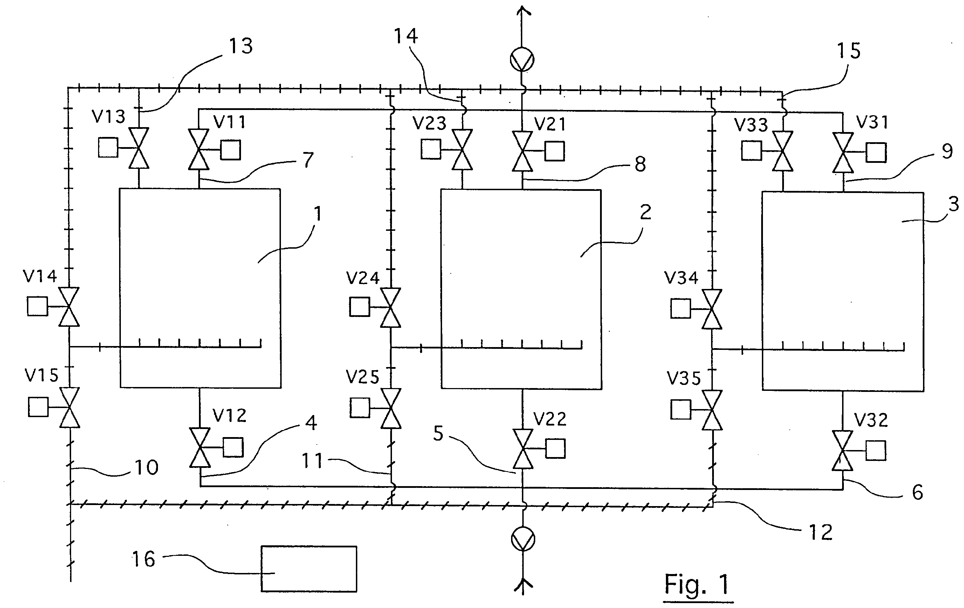

En référence à la figure 1, l'installation représentée comprend trois réacteurs d'hydrolyse 1,2,3, montés en parallèle. Chaque réacteur 1,2,3 est pourvu de moyens d'amenée de boues, respectivement 4,5,6 à hydrolyser et de moyens d'évacuation des boues, respectivement 7,8,9.

L'installation comprend également des moyens d'injection 10,11,12, permettant d'injecter de la vapeur vive alternativement dans chacun desdits réacteurs 1,2,3 et des moyens d'acheminement 13,14,15 de la vapeur de flash provenant de chaque réacteur 1,2,3 vers les autres réacteur. Les moyens d'injections de vapeur vive sont reliés à une chaudière (non représentée).

L'alimentation des réacteurs en boues à traiter, l'acheminement de vapeur vive, l'injection de vapeur de flash, et la vidange des réacteurs, alternativement dans chaque réacteur est organisée grâce à un organe de contrôle 16 relié notamment à toutes les vannes de l'installation (pour les besoin de clarté de la figure 1, ces liaisons ne sont pas représentées sur celle-ci).

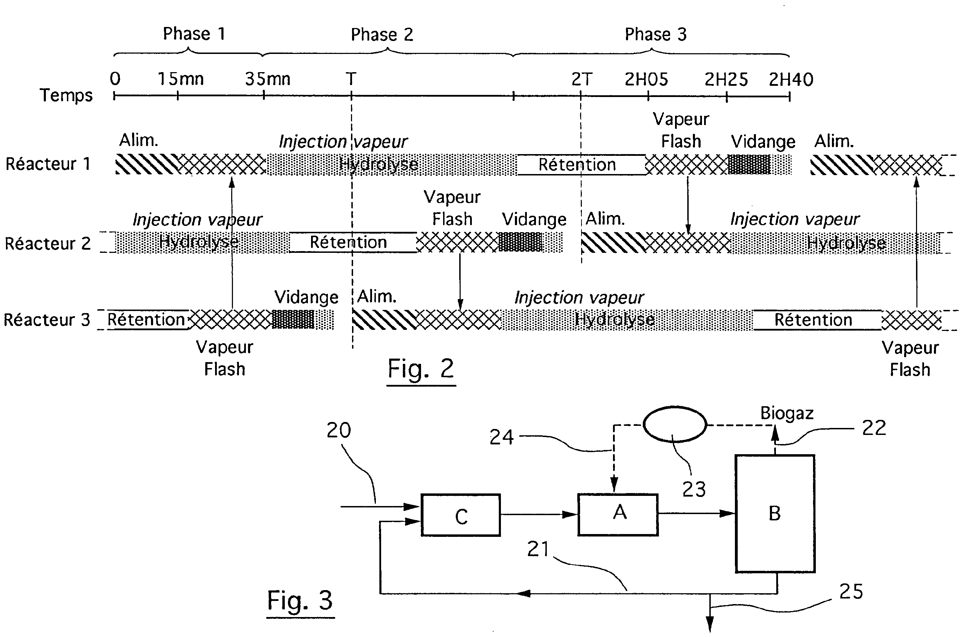

Le fonctionnement de l'installation représentée à la figure 1 va maintenant être expliqué en référence à la figure 2.

Chaque cycle d'hydrolyse thermique est effectué sur une durée de 160 mn (2h40) et comprend les étapes suivantes :
- alimentation du réacteur en boues : 15 mn
- injection de vapeur de flash provenant d'un autre réacteur : 20 mn
- injection de vapeur vive : 60 mn
- rétention : 30 mn
- détente conduisant à la production de vapeur de flash :20 mn
- vidange : 15 mn.

Les temps cumulés relatifs à ces différentes étapes sont indiqués pour le réacteur 1 sur la figure 2 (ces temps sont donnés à titre indicatif).

On peut observer trois phases de fonctionnement de l'installation, chacune de ces phases étant symbolisée sur la figure 2 par une double accolade.

Au cours de la première phase (phase 1), le réacteur 1 est alimenté en boues à traiter et de la vapeur de flash provenant du réacteur 3 (pour lequel le cycle d'hydrolyse thermique a déjà commencé comme symbolisé par les lignes pointillées horizontales) est injectée dans celles-ci. Pendant cette phase 1 de la vapeur vive provenant de la chaudière est injectée dans le réacteur 2(pour lequel le cycle d'hydrolyse thermique a également déjà commencé comme symbolisé par les lignes pointillées). Dans le troisième réacteur l'étape de rétention s'achève et la pression au sein du réacteur est rapidement descendue à la pression détendue pour obtenir de la vapeur de flash qui, comme déjà indiqué est réacheminée vers le réacteur 1. La durée de la première phase est de 35 mn.

Au cours de la deuxième phase, de la vapeur vive est injectée dans le réacteur 1, le contenu du réacteur 2 est maintenu sous pression puis ramené à la pression détendue, la vapeur de flash ainsi émise étant acheminée vers le troisième réacteur, celui-ci ayant été préalablement vidangé et ensuite réalimenté en boues à traiter. La durée de la deuxième phase est de 60 mn.

Au cours de la troisième phase, le contenu du réacteur 1 est maintenu sous pression puis ramené à la pression atmosphérique, la vapeur de flash ainsi émise étant acheminée vers le deuxième réacteur, celui-ci ayant été préalablement vidangé et ensuite réalimenté en boues à traiter, et de la vapeur vive est injectée dans le troisième réacteur. La durée de cette troisième phase est de 65 mn.

On notera qu'entre la vidange d'un réacteur et la réalimentation de celui-ci, un temps de repos d'environ 5 mn à 10 mn est observé.

Comme il ressort clairement de la figure 2, le procédé selon l'invention présente l'avantage de permettre une distribution continue de la vapeur vive provenant de la chaudière alternativement dans les réacteurs 1, 2 et 3.

En référence à la figure 3, l'installation représentée à la figure 1 et désignée dans son ensemble par la référence A peut être combinée à une unité de digestion mésophile ou thermophile désignée par la référence B et à une unité de déshydratation de boues désignée par la référence C.

Selon ce mode de réalisation, les boues en excès à traiter sont acheminées par une canalisation 20 dans l'unité de déshydratation C, puis acheminée vers l'unité d'hydrolyse thermique telle que décrite en référence à la figure 1. Une fois hydrolysée, ces boues sont acheminées vers le digesteur mésophile B (on notera que dans d'autre modes de réalisation, ce digesteur pourra aussi fonctionner en mode thermophile). Le biogaz obtenu lors de la digestion est récupéré en 22 pour chauffer une chaudière 23 qui fournit, via la canalisation 24, la vapeur vive nécessaire au fonctionnement de l'unité A. Les boues provenant du digesteur sont ensuite réacheminées en tête d'installation vers l'unité de déshydratation C. Le résidu de boues très fortement minéralisée est récupéré en 25. Ce résidu est totalement hygiénisé et désodorisé. Son volume, par rapport au volume entrant, est très faible.

Les boues digérées ainsi obtenues peuvent être à nouveau déshydratées pour être ensuite valorisées par exemple en agriculture.

Ces boues peuvent aussi être envoyées vers un procédé de destruction thermique comme l'oxydation par voie humide ou comme l'incinération. Les dimensions des fours d'incinération utilisés dans ce dernier cas pourront être plus faible que la taille de ceux qui auraient du être utilisés si les boues en question n'avaient pas subi d'hydrolyse thermique.

## Revendications

1. Procédé pour l'hydrolyse thermique des boues **caractérisé en ce qu'**il est mené dans au moins trois réacteurs fonctionnant en parallèle dans chacun desquels les boues subissent un cycle complet d'hydrolyse thermique, ledit cycle comprenant les étapes consistant à alimenter lesdites boues dans un desdits réacteurs, à y injecter de la vapeur vive pour les amener à une pression P et à une température T permettant l'hydrolyse, à les maintenir à ladite pression P et à ladite température T pendant un certain temps, à ramener subitement lesdites boues à la pression atmosphérique en libérant de la vapeur de flash, et à vidanger ledit réacteur desdites boues ainsi hydrolysées,
et **en ce qu'**il consiste à décaler dans le temps ledit cycle d'un réacteur à l'autre pour utiliser la vapeur de flash produite à partir d'un réacteur pour l'injecter dans un autre desdits réacteurs, ladite vapeur vive étant injectée continûment alternativement dans lesdits trois réacteurs,
et **caractérisé de plus en ce qu'**il comprend trois phases :
- une première phase durant laquelle :
• des boues sont alimentées dans un premier réacteur et de la vapeur de flash provenant d'un troisième réacteur est injectée dans ledit premier réacteur,
• de la vapeur vive est injectée dans un deuxième réacteur contenant des boues,
• un troisième réacteur contenant des boues est maintenu à la température et à la pression d'hydrolyse puis ramené à la pression atmosphérique, la vapeur de flash émise étant acheminé dans ledit premier réacteur, juste avant d'être vidangé ;
- une deuxième phase durant laquelle :
• de la vapeur vive est injectée dans ledit premier réacteur,
• le deuxième réacteur est maintenu à la température et à la pression d'hydrolyse puis ramené à la pression atmosphérique, la vapeur de flash émise étant acheminé à l'intérieur dudit troisième réacteur, juste avant d'être vidangé,
• des boues sont alimentées dans ledit troisième réacteur et de la vapeur de flash provenant du deuxième réacteur est injectée dans ledit troisième réacteur ;
- une troisième phase durant laquelle :
• le premier réacteur est maintenu à la température et à la pression d'hydrolyse puis ramené à la pression atmosphérique, la vapeur de flash émise étant acheminé à l'intérieur dudit deuxième réacteur, juste avant d'être vidangé,
• des boues sont alimentées dans ledit deuxième réacteur et de la vapeur de flash provenant du premier réacteur est injectée dans ledit deuxième réacteur,
• de la vapeur vive est injectée dans ledit troisième réacteur.

2. Procédé selon la revendication 1 **caractérisé en ce qu'**il est mis en oeuvre dans plus de trois réacteurs fonctionnant en parallèle, ladite vapeur vive étant injectée continûment alternativement dans lesdits réacteurs, lesdites boues étant injectées continûment alternativement dans les réacteurs et extraites continûment alternativement des réacteurs.

3. Procédé selon l'une quelconque des revendications 1 ou 2 **caractérisé en ce que** la pression P est comprise entre 1 MPa et 2 MPa (10bar et 20 bar) et **en ce que** ladite température T est comprise entre 130°C et 200°C.

4. Procédé selon l'une quelconque des revendications 1 à 3 **caractérisé en ce que** la durée de chaque cycle d'hydrolyse est comprise entre 100 minutes et 360 minutes.

5. Procédé selon l'une quelconque des revendications 1 à 4 **caractérisé en ce qu'**il comprend une étape de digestion des boues hydrolysées conduisant à la production d'un biogaz, ledit biogaz étant utilisé pour générer au moins une partie de la vapeur vive nécessaire à l'hydrolyse thermique effectuée dans lesdits au moins deux réacteurs fonctionnant en parallèle.

6. Procédé selon la revendication 5 **caractérisé en ce que** ladite étape de digestion comprend une phase finale aérobie

7. Procédé selon la revendication 5 **caractérisé en ce que** ladite étape de digestion est une digestion mésophile

8. Procédé selon la revendication 5 **caractérisé en ce que** ladite étape de digestion est une digestion thermophile.

9. Procédé selon la revendication 8 **caractérisé en ce qu'**il comprend une étape de digestion aérobie thermophile.

10. Procédé selon l'une quelconque des revendications 6 à 9 **caractérisé en ce que** ladite étape de digestion est couplée à l'hydrolyse thermique, les boues générées par ladite digestion étant mélangées, en tout ou partie, avec les boues en excès et à nouveau hydrolysées.

11. Procédé selon l'une quelconque des revendications 1 à 10 **caractérisé en ce qu'**il comprend une étape consistant à thermocompresser ladite vapeur de flash par ladite vapeur vive.

12. Procédé selon la revendication 11 **caractérisé en ce qu'**au moins une partie de boues digérées est envoyée à une unité d'incinération ou d'oxydation par voie humide.

## Patentansprüche

1. Verfahren zur thermischen Hydrolyse von Schlämmen, **dadurch gekennzeichnet, dass** es in mindestens drei Reaktoren durchgeführt wird, die parallel arbeiten, wobei in jedem von ihnen Schlämme einem vollständigen thermischen Hydrolysezyklus unterzogen werden, wobei der Zyklus die Schritte umfasst, die bestehen aus: Zuführen der Schlämme in einen der Reaktoren, Einsprühen von Frischdampf darin, um sie auf einen Druck P und auf eine Temperatur T zu führen, welche die Hydrolyse gestatten, deren Halten bei dem Druck P und der Temperatur T während einer bestimmen Zeit, plötzliches Zurückführen der Schlämme auf Atmosphärendruck, indem Flash-Dampf freigesetzt wird, und Entleeren der so hydrolysierten Schlämme aus dem Reaktor;
und dadurch, dass es mit der Zeit aus dem Verschieben des Zyklus eines Reaktors zum anderen besteht, um den aus einem Reaktor erzeugten Flash-Dampf zu nutzen, um ihn in einen anderen der Reaktoren einzusprühen, wobei der Frischdampf kontinuierlich alternativ in die drei Reaktoren eingesprüht wird;
und ferner **dadurch gekennzeichnet, dass** es drei Phasen umfasst:
- eine erste Phase, während welcher:
• Schlämme einem ersten Reaktor zugeführt werden, und Flash-Dampf, der von einem dritten Reaktor stammt, in den ersten Reaktor eingesprüht wird,
• Frischdampf in einen zweiten Reaktor eingesprüht wird, der Schlämme enthält,
• ein dritter Reaktor, der Schlämme enthält, bei der Temperatur und bei dem Druck der Hydrolyse gehalten wird, dann auf Atmosphärendruck zurückgeführt wird, wobei der abgegebene Flash-Dampf in den ersten Reaktor geleitet wird, knapp bevor er entleert wird;
- eine zweite Phase, während welcher:
• Frischdampf in den ersten Reaktor eingesprüht wird,
• der zweite Reaktor bei der Temperatur und bei dem Druck der Hydrolyse gehalten wird, dann auf Atmosphärendruck zurückgeführt wird, wobei der abgegebene Flash-Dampf in das Innere des dritten Reaktors geleitet wird, knapp bevor er entleert wird;
• Schlämme dem dritten Reaktor zugeführt werden, und Flash-Dampf, der von dem zweiten Reaktor stammt, in den dritten Reaktor eingesprüht wird;
- eine dritte Phase, während welcher:
• der erste Reaktor bei der Temperatur und bei dem Druck der Hydrolyse gehalten wird, dann auf Atmosphärendruck zurückgeführt wird, wobei der abgegebene Flash-Dampf in das Innere des zweiten Reaktors geleitet wird, knapp bevor er entleert wird;
• Schlämme dem zweiten Reaktor zugeführt werden, und Flash-Dampf, der von dem ersten Reaktor stammt, in den zweiten Reaktor eingesprüht wird;
• Frischdampf in den dritten Reaktor eingesprüht wird.

2. Verfahren nach Anspruch 1, **dadurch gekennzeichnet, dass** es in mehr als drei Reaktoren durchgeführt wird, die parallel arbeiten, wobei der Frischdampf kontinuierlich alternativ in die Reaktoren eingesprüht wird, wobei die Schlämme kontinuierlich alternativ in die Reaktoren eingespritzt und alternativ kontinuierlich aus den Reaktoren extrahiert werden.

3. Verfahren nach einem der Ansprüche 1 oder 2, **dadurch gekennzeichnet, dass** der Druck P zwischen 1 MPa und 2 MPa (10 bar und 20 bar) liegt, und dass die Temperatur T zwischen 130 °C und 200 °C liegt.

4. Verfahren nach einem der Ansprüche 1 bis 3, **dadurch gekennzeichnet, dass** die Dauer jedes Hydrolysezyklus zwischen 100 Minuten und 360 Minuten liegt.

5. Verfahren nach einem der Ansprüche 1 bis 4, **dadurch gekennzeichnet, dass** es einen Schritt des Digerierens hydrolysierter Schlämme umfasst, der zur Produktion eines Biogases führt, wobei das Biogas zur Erzeugung mindestens eines Teils des Frischdampfs verwendet wird, der für die thermische Hydrolyse notwendig ist, die in den mindestens zwei parallel arbeitenden Reaktoren bewirkt wird.

6. Verfahren nach Anspruch 5, **dadurch gekennzeichnet, dass** der Schritt des Digerierens eine finale aerobe Phase umfasst.

7. Verfahren nach Anspruch 5, **dadurch gekennzeichnet, dass** der Schritt des Digerierens ein mesophiles Digerieren ist.

8. Verfahren nach Anspruch 5, **dadurch gekennzeichnet, dass** der Schritt des Digerierens ein thermophiles Digerieren ist.

9. Verfahren nach Anspruch 8, **dadurch gekennzeichnet, dass** es einen Schritt des aeroben thermophilen Digerierens umfasst.

10. Verfahren nach einem der Ansprüche 6 bis 9, **dadurch gekennzeichnet, dass** der Schritt des Digerierens mit der thermischen Hydrolyse gekoppelt ist, wobei die durch das Digerieren erzeugten Schlämme zur Gänze oder teilweise mit den Schlämmen im Überschuss gemischt und erneut hydrolysiert werden.

11. Verfahren nach einem der Ansprüche 1 bis 10, **dadurch gekennzeichnet, dass** es einen Schritt umfasst, der aus der Thermokompression des Flash-Dampfs durch den Frischdampf besteht.

12. Verfahren nach Anspruch 11, **dadurch gekennzeichnet, dass** mindestens ein Teil der digerierten Schlämme zu einer Verbrennungs- oder Nassoxidationseinheit geführt wird.

## Claims

1. Process for thermal hydrolysis of sludge, **characterised in that** it is carried out in at least three reactors operating in parallel in each of which sludge is subjected to a complete thermal hydrolysis cycle, the said cycle comprising steps consisting of feeding the said sludge into on of said reactors, injecting live steam into it to bring it to a pressure P and a temperature T to enable hydrolysis, and keeping the sludge at the said pressure P and the said temperature T for a given time, and then suddenly returning the said sludge to atmospheric pressure releasing flash steam, and emptying the said sludge thus hydrolysed, from the reactor,
and **in that** it consists of offsetting the time of the said cycle in the different reactors to that flash steam produced from one reactor can be injected into another one of said reactors, the said live steam being continuously injected alternately in the said three reactors and **characterised in that** it includes three phases:
- a first phase during which:
• sludge is fed into a first reactor and the flash steam originating from a third reactor is injected into the said first reactor,
• live steam is injected into a second reactor containing sludge,
• a third reactor containing sludge is kept at the hydrolysis temperature and pressure and is then returned to atmospheric pressure, the emitted flash steam being transferred into the said first reactor just before it is emptied;
- a second phase during which:
• live steam is injected into the said first reactor,
• the second reactor is kept at the hydrolysis temperature and pressure and is then returned to atmospheric pressure, the emitted flash steam being transferred into the said third reactor just before it is emptied,
• the sludge is fed into the said third reactor and the flash steam from the second reactor is injected into the said third reactor;
- a third phase during which:
• the first reactor is kept at the hydrolysis temperature and pressure and is then returned to atmospheric pressure, the emitted flash steam then being transferred into the said second reactor just before it is emptied,
• sludge is fed into the said second reactor and flash steam originating from the first reactor is injected into the said second reactor,
• live steam is injected into the said third reactéor.

2. Process according to claim 1, **characterised in that** it is used in more than three reactors operating in parallel, the said live steam being injected continuously and alternately into the said reactors, the said sludge being continuously injected alternately into the reactors and continuously extracted alternately from the reactors.

3. Process according to any one of claims 1 or 2, **characterised in that** the pressure P is between 10 bars and 20 bars and **in that** the said temperature T is between 130°C and 200°C.

4. Process according to any of the claims 1 to 3, **characterised in that** the duration of each hydrolysis cycle is between 100 mn and 360 mn.

5. Process according to any one of claims 1 to 4, **characterised in that** it comprises a step for digestion of hydrolysed sludge leading to the production of a biogas, the said biogas being used to generate at least part of the live steam necessary for thermal hydrolysis in the said at least two reactors operating in parallel.

6. Process according to claim 5, **characterised in that** the said digestion step includes a final aerobic phase.

7. Process according to claim 5, **characterised in that** the said digestion step is a mesophilic digestion.

8. Process according to claim 5, **characterised in that** the said digestion step is a thermophilic digestion.

9. Process according to claim 8, **characterised in that** it comprises a thermophile aerobic digestion step.

10. Process according to any one of claims 6 to 9, **characterised in that** the said digestion step is coupled to the thermal hydrolysis, the sludge generated by the said digestion being fully or partly mixed with excess and rehydrolysed sludge.

11. Process according to any one of claims 1 to 10, **characterised in that** it comprises a step consisting of thermal compressing the said flash steam by the said live steam.

12. Process according to claim 10, **characterised in that** at least some of the digested sludge is transferred to an incineration or wet oxidation unit.
